# EUROPEAN PATENT APPLICATION

(11) **EP 0 974 327 A2**
(43) Date of publication of application: **26.01.2000**
(21) Application number: 99305527.6
(22) Date of filing: 12.07.1999
(51) Int. Cl.: A61G 3/06, B60P 1/54

(54) **Vehicle loading system**

(30) Priority: 18.07.1998 GB 9815612
(71) Applicant: Goldsworthy, Martin, 31303 Burgdorf (DE)
(72) Inventor: Goldsworthy, Martin, 31303 Burgdorf (DE)
(74) Representative: Wingfield, Anne M.

(57) **Abstract**

Apparatus (10) for loading a vehicle (1) comprises a rail (12) adapted to be mounted in the vehicle and a carriage(14) mounted on and movable along the rail. A cantilevered extension arm (26) extends from the carriage to support a load. The carriage can be moved to a position on the rail in which the carriage is located inside the vehicle and the extension arm extends outside the vehicle.

## Description

The present invention relates to a vehicle loading system and, in particular, to apparatus adapted to be mounted in a vehicle to assist with the movement of load items to or from the vehicle.

The restricted height inside many vehicles and the limited space offered by a door opening can create awkward conditions for moving unwieldy or sensitive items into or out of the vehicle. Known systems for moving loads into or from a vehicle include, for example, the apparatus described in FR 2553046 wherein a hoist arrangement is suspended by rollers from a rail. The rail is mounted through the vehicle and extends out from one side of the vehicle to be supported by a post resting on the ground. Such arrangements are cumbersome, require time to be set up before they can be used and then have to be removed before the vehicle can travel.

The present invention has been made from a consideration of the disadvantages with known loading systems and, in particular, to provide an improved loading system which overcomes or minimises one or more of the aforesaid disadvantages.

One preferred object of the invention is to provide an apparatus for loading a vehicle which, when mounted in the vehicle, allows the vehicle to be driven and used normally without having to remove the apparatus.

According to the invention there is provided apparatus for loading a vehicle comprising a rail adapted to be mounted in said vehicle, a carriage mounted on and movable along said rail and a cantilevered extension arm extending from said carriage, said extension arm being adapted to support a load, wherein said carriage is movable to a position on said rail in which said carriage is located inside said vehicle and said extension arm extends outside said vehicle.

Preferably said rail is substantially contained within said vehicle. Preferably tackle means is secured to the extension arm, preferably adjacent the free end thereof. Preferably the length of the rail is adjustable, for example the rail may comprise two or more telescopic sections securable against relative movement by one or more locking devices. Preferably the rail is adapted to be mounted adjacent the vehicle roof. Preferably the rail is adapted to be mounted to the grab handles of a vehicle. Any suitable mounting or clamping means may be used to secure the rail to the vehicle or to the grab handles.

Preferably the rail is adapted to be mounted horizontally across the width of the vehicle, typically between door openings. Preferably, the carriage is movable to a position in which the extension arm extends inside the vehicle. Preferably the carriage comprises a base member which lies substantially parallel to and spaced from said rail. Preferably first and second transverse members extend from the base towards the rail, typically from respective ends thereof. Preferably the first and second transverse members are spaced apart. Preferably first and second rollers are provided on said carriage, preferably on said first and second transverse members respectively, typically adjacent the free ends of said members. Preferably one of said first and second rollers is mounted above said rail and the other of said first and second rollers is mounted below the rail. Preferably the rollers are horizontally spaced by a spacing substantially similar to a spacing between the joining of the carriage and extension arm and the point at which tackle means is secured to the extension arm. Preferably the rail acts as a guide for said rollers.

Preferably the extension arm is substantially parallel to and spaced from said rail. Preferably the extension arm is an integral extension of said base.

Preferably the carriage is detachably mounted on said rail. Preferably the carriage is mounted on said rail such that the carriage may be lifted off the rail, turned and replaced on said rail in a different orientation relative to the rail. Preferably the carriage is adapted to be mounted on said rail in one of two orientations such that the extension arm extends from the carriage towards one side or the other side of said vehicle.

The invention further includes a vehicle having apparatus of the invention mounted therein.

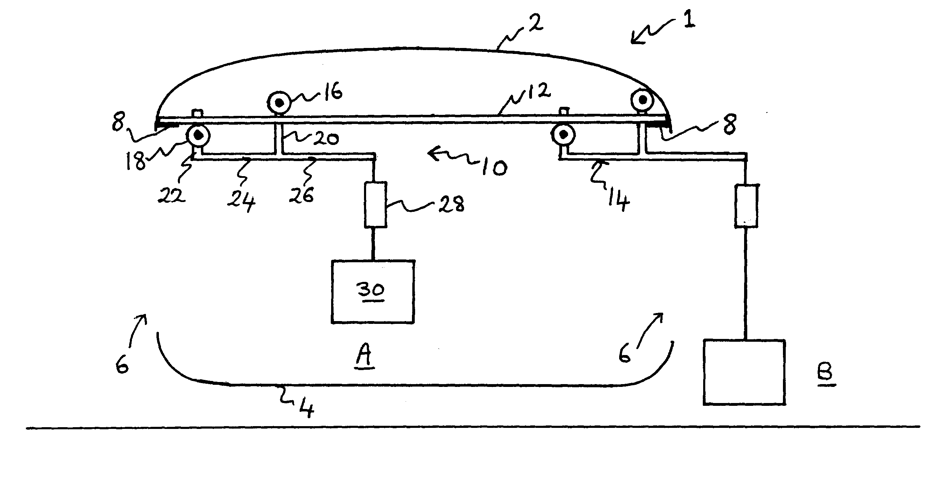

The invention will now be described further by way of example only and with reference to the accompanying drawing which shows a vertical cross-section through the rear passenger door openings of a vehicle fitted with apparatus of the invention.

Referring to the drawing, a vehicle 1 comprises a roof 2, floor 4 and rear passenger door openings 6. Conventional grab handles 8 are located above the door openings. The apparatus 10 of the invention comprises a rail 12 which is clamped at each end by any suitable means to respective grab handles 8. The rail 12 extends inside the vehicle substantially transverse to the longitudinal axis of the vehicle. Typically, the rail 12 is mounted inside the vehicle towards or adjacent the roof 2, to lie substantially perpendicular to the rear door openings 6 and substantially in the centre of the openings. A carriage 14 is mounted on the rail 12 by means of upper and lower rollers 16, 18 secured to respective legs 20, 22 extending transversely from the base 24 of the carriage. The base 24 and an extension arm 26 extending therefrom lie, in use, substantially parallel to the rail 12. Tackle means 28, which may comprise any suitable arrangement of lifting mechanism, is attached to the extension arm 26, typically adjacent the free end thereof.

A load item 30 may be raised or lowered using the tackle means 28. The load item 30 suspended from the extension arm 26 may be moved into or out of the vehicle by transversing the carriage along the rail 12.

In use, the tackle means 28 is attached to the load item 30, the latter being lifted to a position clear of the vehicle floor 4. The carriage 14 is then moved along the rail 12 until the load item is at the desired location inside or outside the vehicle. The load item is then lowered using the tackle means and detached therefrom. The carriage 14 runs smoothly on the rail 12 by means of the rollers 16, 18 which may locate in grooves or the like on the rail.

Two positions of the carriage 14 relative to the rail 12 are shown in the drawing. In the first position A, the extension arm 26 which supports the suspended load is located within the vehicle. Because the extension arm is cantilevered to the carriage, when the carriage is at one end of the rail the extension arm extends outside the vehicle thorough the adjacent opening 6. In this second position B, the tackle means is outside the vehicle and may be used to raise or lower the load item 30 outside the vehicle.

Typically the rollers 16, 18 are spaced apart along the length of the rail 12. The upper roller 16 is mounted above the rail 12 and supports the carriage 14. The lower roller 18 is mounted below the rail 12 and acts to counteract any torque exerted on the carriage and extension arm by the load. Typically the upper roller 16 is located at a position along the rail substantially centrally between the lower roller 18 and the free end of the extension arm 26 or the point of attachment of the tackle means to the extension arm. Typically the extension legs 20, 22 extend respectively from each end of the base 24. Typically the rollers and/or the extension legs are spaced by an amount sufficient to effectively counteract any torque exerted by the load.

Since the rollers 16, 18 simply rest against the rail 12, the carriage 14 may be easily lifted off the rail when not required or in order to turn the carriage relative to the rail so that the direction of extension of the arm is reversed. This allows the apparatus of the invention to be used to lift loads to or from either side of the vehicle. The rail 12 may comprise two or more telescopic sections so that the length thereof is adjustable to suit the dimensions of a particular vehicle. Suitable locking means may be provided on the telescopic sections to prevent relative movement thereof when the desired length of rail has been selected.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Apparatus (10) for loading a vehicle (1) comprising a rail (12) adapted to be mounted in said vehicle, a carriage (14) mounted on and movable along said rail and a cantilevered extension (26) arm extending from said carriage, said extension arm being adapted to support a load (30), wherein said carriage is movable to a position on said rail in which said carriage is located inside said vehicle and said extension arm extends outside said vehicle.

2. Apparatus according to claim 1, wherein said rail is substantially contained within said vehicle.

3. Apparatus according to any preceding claim, wherein the length of the rail is adjustable.

4. Apparatus according to any preceding claim, wherein the rail is adapted to be mounted horizontally across the width of the vehicle.

5. Apparatus according to any preceding claim, wherein the carriage is movable to a position in which the extension arm extends inside the vehicle.

6. Apparatus according to any preceding claim, wherein the carriage comprises a base member (24) which lies substantially parallel to and spaced from said rail and first and second spaced apart transverse members (20, 22) extend from the base towards the rail.

7. Apparatus according to any preceding claim, wherein first and second rollers (16, 18) are provided on said carriage and one of said first and second rollers (16) is mounted above said rail and the other of said first and second rollers (18) is mounted below the rail.

8. Apparatus according to claim 11, wherein the rollers are horizontally spaced by a spacing substantially similar to a spacing between the joining of the carriage and extension arm and the point at which tackle means (28) is secured to the extension arm.

9. Apparatus according to any preceding claim, wherein the extension arm is substantially parallel to and spaced from said rail.

10. Apparatus according to any preceding claim, wherein the carriage is mounted on said rail such that the carriage may be lifted off the rail, turned and replaced on said rail in a different orientation relative to the rail.
